# EUROPÄISCHE PATENTSCHRIFT

(11) **EP 1 779 954 B1**
(45) Veröffentlichungstag und Bekanntmachung des Hinweises auf die Patenterteilung: **19.06.2013**
(21) Anmeldenummer: 05023349.3
(22) Anmeldetag: 26.10.2005
(51) Int. Cl.: B23K 1/00, H01R 4/00

(54) **Verfahren zur Herstellung eines Heizkörpers**
Heat exchanger manufacturing process
Procédé de fabrication d'un échangeur de chaleur

(43) Veröffentlichungstag der Anmeldung: 02.05.2007
(73) Patentinhaber: Zehnder Verkaufs- und Verwaltungs AG, 5722 Gränichen (CH)
(72) Erfinder: Heitzmann, Max, 79361 Sasbach (DE)
(74) Vertreter: Stenger, Watzke & Ring

(56) Entgegenhaltungen:
- EP-A- 0 371 455
- EP-A- 0 371 630
- US-B1- 6 188 052
- US-B1- 6 229 124

## Beschreibung

Die vorliegende Erfindung betrifft ein Verfahren zur Herstellung eines Heizkörpers gemäß dem Oberbegriff des Anspruchs 1, wobei wenigstens zwei Sammelleitungen voneinander beabstandet angeordnet werden und mittels Verbindungsleitungen strömungstechnisch miteinander verbunden werden, indem die Sammelleitungen und die Verbindungsleitungen in bestimmungsgemäßer Weise zusammengefügt und heizmediumsdicht durch Löten stofflich miteinander verbunden werden, wobei die nach bestimmungsgemäß erfolgtem Zusammenfügen vorliegenden gemeinsamen Fügebereiche der Sammelleitungen und/oder der Verbindungsleitungen vor deren Zusammenfügen erwärmt werden, vorzugsweise auf die erforderliche Löttemperatur.

Es ist aus dem Stand der Technik bekannt, beispielsweise als Handtuchtrockner verwendbare, leiterförmige Badheizkörper mittels eines derartigen Verfahrens herzustellen. Der fertig zusammengefügte Heizkörper weist zwei parallel zueinander angeordnete Sammelrohre auf, die strömungstechnisch mittels zwischen ihnen angeordneten Verbindungsrohren verbunden sind. Die Herstellung des Heizkörpers erfolgt derart, daß zunächst die einzelnen Bauelemente des Heizkörpers in Form der Verbindungs- und Sammelrohre gefertigt und bereitgestellt werden. Zur Montage liegen daher auf das gewünschte Maß abgelängte Verbindungsrohre sowie mit entsprechenden Öffnungen zum Anschluß der Verbindungsrohre versehene und entsprechend den Abmessungen des Heizkörpers abgelängte Sammelrohre vor. Die Montage der einzelnen Bauelemente erfolgt derart, daß der Heizkörper zunächst vormontiert wird. Das bedeutet, daß die Verbindungsrohre in die in den Sammelrohren vorgesehenen Öffnungen eingebracht werden und sämtliche Bauelemente in der bestimmungsgemäßen Lage zueinander angeordnet und gegebenenfalls hilfsmäßig fixiert werden. Die einzelnen Bauelemente des derart vormontierten Heizkörpers werden dann miteinander stofflich verbunden. Dieses erfolgt beispielsweise durch ein Erhitzen der Verbindungsbereiche der Sammel- und Verbindungsrohre mittels Induktionsspulen. Liegt im Verbindungsbereich die erforderliche Löttemperatur vor, werden die einzelnen Elemente unter Zugabe eines Lotes heizmediumsdicht miteinander verlötet.

Aufgrund der Vormontage und der Geometrie des zu lötenden Heizkörpers ist die Verwendung besonders angepaßter Induktionsspulen zum Erhitzen der Verbindungsbereiche notwendig. Die Geometrie der Induktionsspulen ist von der jeweils vorliegenden Geometrie des Heizkörpers abhängig, weshalb für jeden Heizkörpertyp spezifisch angepaßte Induktionsspulen verwendet werden müssen. Für eine automatisierte Fertigung des Heizkörpers müssen die Induktionsspulen derart ausgebildet sein, daß sie ein schnelles und sicheres Erwärmen der Verbindungsstelle auf die erforderliche Löttemperatur gewährleisten und darüber hinaus schnell und einfach am Verbindungsbereich angeordnet und von diesem auch wieder entfernt werden können. Aufgrund dieser Problematik sind die zuvor beschriebenen, aus dem Stand der Technik bekannten Verfahren zur Herstellung von Heizkörpern unvorteilhaft kostenintensiv und schränken die Gestaltungsfreiheit der Heizkörper hinsichtlich ihrer Geometrie in nachteiliger Weise ein.

Ein gattungsgemäßes Verfahren ist aus der EP 0 240 954 A1 bekannt geworden.

Ausgehend von diesem Stand der Technik ist es die Aufgabe der vorliegenden Erfindung, ein Verfahren zur Herstellung eines Heizkörpers zu ermöglichen, bei dem die Geometrie des herzustellenden Heizkörpers möglichst wenig aufgrund von Vorgaben des Fertigungsverfahrens eingeschränkt ist, die zum Erwärmen der Verbindungsstellen notwendigen Heizeinheiten geometrisch einfach aufgebaut und daher kostengünstig sind, die Heizeinheiten unabhängig von der Geometrie des fertig montierten Heizkörpers verwendet werden können und gleichzeitig eine gleichmäßige Wärmeeinbringung sowie eine kontinuierliche Fertigung der Heizkörper ermöglichen.

Zur Lösung dieser Aufgabe wird mit der Erfindung ein Verfahren zur Herstellung eines Heizkörpers mit den Merkmalen des Oberbegriffs des Anspruchs 1 vorgeschlagen, welches dadurch gekennzeichnet ist, daß die Sammelleitungen unter einer elastischen Verformung wenigstens einer Sammelleitung in ihre bestimmungsgemäße Lage zueinander und zu den Verbindungsleitungen gebracht werden.

In vorteilhafter Weise erfolgt bei einer derartigen Verfahrensführung die Erwärmung der Fügebereiche unabhängig von der späteren Geometrie des Heizkörpers. Hierdurch besteht die Möglichkeit, die zur Erwärmung verwendeten Heizvorrichtungen geometrisch einfach auszubilden und für eine Vielzahl unterschiedlicher Heizkörpergeometrien zu verwenden. Da die Erwärmung der miteinander zu verlötenden Elemente des Heizkörpers vor deren Zusammenfügen erfolgt, können die von der Erwärmung entkoppelten Montageschritte mit Vorteil als kontinuierlich ablaufende Montage ausgebildet werden. Durch den Einsatz geometrisch einfach ausgebildeter Induktionsspulen im Gegensatz zu bei einem vormontierten Heizkörper verwendeten komplizierten Klappinduktoren können in vorteilhafter Weise im Vergleich zum Stand der Technik Kosten eingespart werden. Darüber hinaus werden die miteinander zu verbindenden Bereiche der Verbindungs- und Sammelleitung einzeln separat voneinander und nicht im gemeinsamen Verbund erhitzt, wodurch es zu einer gleichmäßigen und optimierten Wärmeeinbringung in die jeweiligen Verbindungsbereiche kommt.

Erfindungsgemäß werden die Sammelleitungen in Richtung ihrer Längsachse mit einer vorzugsweise konstanten Geschwindigkeit kontinuierlich unter einem spitzen Winkel schräg zueinander gefördert. Dabei können die mechanisch fertig bearbeiteten und mit entsprechenden Durchgangsöffnungen zur Aufnahme oder zum Anstoßen der Verbindungsleitungen versehenen Sammelleitungen in einer fördernden und gleichzeitig fixierenden und justierenden Vorrichtung aufgenommen sein. Dadurch, daß die Sammelleitungen in Richtung ihrer Längsachse unter einem spitzen Winkel in ihre letztendliche Montagelage gebracht werden, können sie in einfacher Weise mit den Verbindungsleitungen zusammengefügt werden, indem diese gemäß einer vorteilhaften Weiterbildung der Erfindung in ihre bezüglich der Sammelleitungen bestimmungsgemäße Lage gebracht werden und in deren Bewegungsrichtung mit gleicher Vorschubgeschwindigkeit bewegt werden. Durch die zuvor genannte Orientierung der Sammelleitungen in einem spitzen Winkel zueinander nähern sich diese den mitbewegten Verbindungsleitungen an, bis die Verbindungsleitungen in die in den Sammelleitungen eingebrachten Öffnungen eingesetzt sind.

Erfindungsgemäß werden die Sammelleitungen unter einer elastischen Verformung wenigstens einer Sammelleitung in ihre bestimmungsgemäße Lage zueinander und zu den Verbindungsleitungen gebracht. Die elastische Verformung kann durch eine Zwangsführung der Sammelleitungen durch eine entsprechende Fixierungsvorrichtung erzielt werden. Wenn die in Förderrichtung vorderen Enden der Sammelleitungen ihre bestimmungsgemäße Lage zueinander erreicht haben oder kurz vor diesem Zeitpunkt, werden sie derart parallel zueinander weitergeführt, daß sie diese Lage beibehalten, währenddessen die nachfolgenden Bereiche der Sammelleitungen weiterhin schräg zueinander gefördert werden. Aufgrund dieser Umlenkung kommt es in den Sammelleitungen zu der genannten elastischen Verformung. Kurz vor der Verformung oder während der Verformung werden die Verbindungsleitungen aufgrund des gemeinsamen Vorschubs automatisch in die oder an die in den Sammelleitungen zu diesem Zweck vorgesehenen Öffnungen eingeführt oder angestoßen. Die Verbindungsleitungen werden dazu in dem Bereich, in dem die Sammelleitungen schräg zueinander gefördert werden, relativ zu diesen in der bestimmungsgemäßen Lage angeordnet und mit diesen mitbewegt. Sie werden automatisch in die Öffnungen der Sammelrohre eingesetzt, wenn diese ihren bestimmungsgemäßen Abstand zueinander erreichen und die elastische Verformung durchlaufen. Die Verbindungsleitungen verbleiben mit den Sammelleitungen zusammengefügt, wenn sich diese nachfolgend kontinuierlich in ihrer bestimmungsgemäßen Lage zueinander fortbewegen. Durch diese kontinuierliche Ausführung des Verfahrens wird in vorteilhafter Weise dessen Produktivität im Vergleich zum Stand der Technik verbessert, während gleichzeitig die Produktionskosten verringert werden können.

Nach einer besonders vorteilhaften Ausführungsform der Erfindung werden die Sammelleitungen in Richtung ihrer Längsachse durch vorzugsweise ortsfeste Heizeinheiten befördert. Nach dem Durchlaufen der Heizeinheiten sind die Sammelleitungen vorzugsweise auf eine zum Löten ausreichende Temperatur erhitzt. Aufgrund ihrer erhöhten Temperatur setzen die Sammelleitungen der zuvor erwähnten elastischen Verformung vorteilhafterweise nur einen geringen Widerstand entgegen und überstehen diese, ohne Schaden zu nehmen. Durch die kontinuierliche Förderung der Sammelleitungen durch die Heizeinheiten kommt es zu deren gleichmäßigen Erhitzung über dem gesamten Querschnitt. Durch die derart sichergestellte Erhitzung der Sammelleitungen im gesamten Verbindungsbereich werden Lötfehler wie Leck- oder Schwachstellen vermieden. Darüber hinaus ist der vorrichtungsseitige Aufwand für derartige ortsfeste Heizvorrichtungen gering, was wiederum zu einer kostenoptimierten Herstellung der Heizkörper führt.

Eine weitere Ausführungsform der Erfindung sieht vor, daß die Verbindungsleitungen nur an ihren mit den Sammelleitungen zu verbindenden Endbereichen erwärmt werden. Zu diesem Zweck werden entsprechende Heizvorrichtungen an den Endbereichen der Verbindungsleitungen angeordnet. Um eine ausreichende Erwärmung der Endbereiche zu gewährleisten, können die Verbindungsleitungen an ortsfesten Heizvorrichtungen ausreichender Größe vorbeigeführt werden. Derartige Heizvorrichtungen enden kurz vor der Fügestelle der Sammel- und Verbindungsleitungen. Es ist ebenfalls möglich, an den Endbereichen der Verbindungsleitungen Heizvorrichtungen anzuordnen und diese zusammen mit den Verbindungsleitungen fortzubewegen. Kurz vor dem Erreichen der Fügestelle werden diese Heizvorrichtungen von den Verbindungsleitungen entfernt. In beiden Fällen ist eine sichere, ausreichende und auf die jeweiligen Materialeigenschaften und Geometrien einstellbare Erwärmung der Verbindungsleitungen gewährleistet. Im Falle mitbewegter Heizvorrichtungen wird darüber hinaus die Nutzung der zum Erhitzen aufgewendeten Energie optimiert, da die Heizvorrichtungen individuell auf die Geometrie der Verbindungsleitung angepaßt werden können und somit Energieverluste in Folge nicht auf die Verbindungsleitungen übertragener Wärmeenergie vermieden werden können.

Besonders vorteilhaft erfolgt die Erwärmung der Verbindungs- und/oder Sammelleitungen induktiv. Zu diesem Zweck werden die Sammelleitungen jeweils durch wenigstens eine Induktionsspule gefördert und dadurch erwärmt. Die Endbereiche der Verbindungsleitungen werden beispielsweise durch stirnseitig an den Endbereichen angeordnete Induktionsspulen erhitzt. Kurz vor dem Zusammenfügen werden diese Induktionsspulen von den Verbindungsleitungen entfernt. Durch eine Variation und Steuerung des durch die Induktionsspulen fließenden Stroms ist eine gezielte und steuerbare Erwärmung der Verbindungsbereiche möglich. Das Verfahren ist aufgrund dieser Steuerbarkeit hoch flexibel hinsichtlich unterschiedlicher Geometrien der zu verbindenden Heizkörperelemente und hinsichtlich unterschiedlicher Materialien.

Gemäß dem Erfindung ist vorgesehen, daß die Sammelleitungen und die Verbindungsleitungen unter Zugabe eines Lotes heizmediumsdicht miteinander verlötet werden, sobald sie in ihrer bestimmungsgemäßen Position zueinander angeordnet sind. Vorzugsweise erfolgt das Löten unter einer Schutzgasatmosphäre.

Weitere Einzelheiten und Merkmale der vorliegenden Erfindung ergeben sich aus der folgenden beispielhaften Beschreibung einer bevorzugten und nicht beschränkenden Ausführungsform des Verfahrens. Dabei zeigt:
- Fig. 1: eine schematische Darstellung des erfindungsgemäßen Verfahrens in einem ersten Schritt,
- Fig. 2: eine schematische Darstellung des erfindungsgemäßen Verfahrens aus Fig. 2 zu einem nachfolgenden Zeitpunkt,
- Fig. 3: das erfindungsgemäße Verfahren aus Fig. 1 und 2 zu einem abermals späteren Zeitpunkt und
- Fig. 4: eine schematische perspektivische Darstellung des in Fig. 3 dargestellten Zustandes.

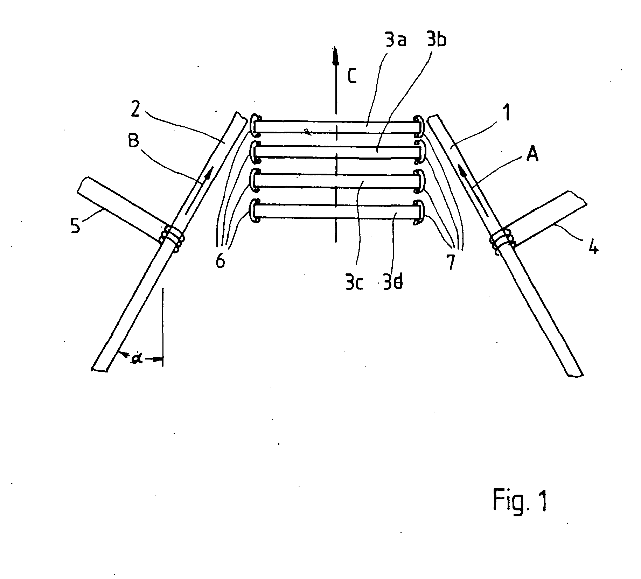

Fig. 1 zeigt das erfindungsgemäße Verfahren zu einem ersten Zeitpunkt, zu dem keine der dargestellten Elemente des Heizkörpers zusammengefügt sind. Zwei rohrförmige Sammelleitungen 1, 2 werden unter einem Winkel α schräg aufeinander zubewegt. Die Längsachsen der Sammelleitungen liegen dabei in einer gemeinsamen Ebene. Der Vorschub der Sammelleitungen 1, 2 erfolgt in Richtung ihrer Längsachse und ist durch Pfeile A, B gekennzeichnet. Zwischen den Sammelleitungen 1, 2 befinden sich Verbindungsleitungen 3, von denen lediglich die Verbindungsleitungen 3a, b, c und d dargestellt sind. Die Verbindungsleitungen 3 bewegen sich in Richtung des Pfeils C mit gleicher Geschwindigkeit wie die Sammelleitungen 1, 2. Die Verbindungsleitungen 3a, b und c sind in der durch die Längsachsen der Sammelleitungen 1, 2 gebildeten Ebene angeordnet, während sich die Verbindungsleitung 3d sowie weitere, nicht dargestellte Verbindungsleitungen in einer zu dieser parallelen Ebene befinden.

Die Sammelleitungen 1, 2 werden durch ihren Vorschub durch nur schematisch angedeutete Induktionsspulen 4, 5 hindurchgeleitet. Aufgrund des durch die Induktionsspulen 4, 5 strömenden Stroms kommt es während des Durchlaufens der Sammelleitungen 1, 2 zu deren Erwärmung auf die notwendige Löttemperatur. Die Induktionsspulen 4, 5 sind ortsfest angeordnet.

Beiderseits der Verbindungsleitungen 3 ist endseitig jeweils eine Induktionsspule 6, 7 angeordnet. Die Induktionsspulen 6, 7 werden zusammen mit den Verbindungsleitungen 3 mit gleicher Geschwindigkeit in die durch den Pfeil C gekennzeichnete Richtung fortbewegt. Aufgrund des durch die Induktionsspulen 6, 7 geleiteten Stroms kommt es zu einer Erwärmung der endseitigen Bereiche der Verbindungsleitungen 3 auf die für das Löten gewünschte Temperatur.

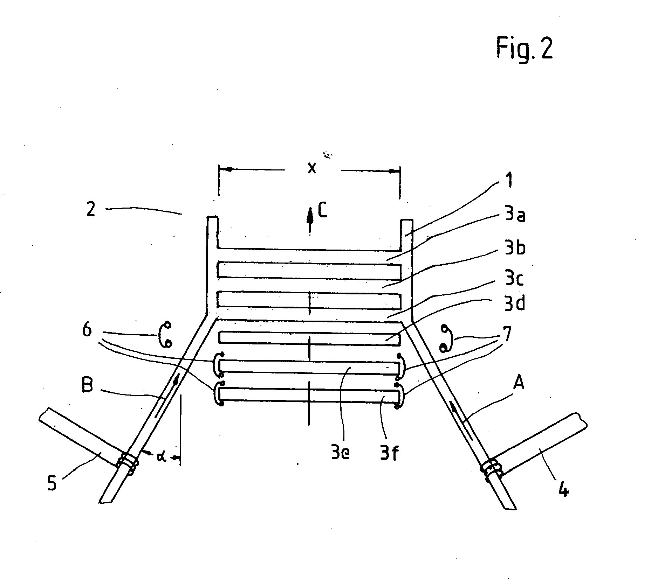

Fig. 2 zeigt die Herstellung des Heizkörpers zu einem späteren Zeitpunkt als Fig. 1. Die Sammelleitungen 1, 2 sind im Vergleich zu Fig. 1 weiter in Richtung Pfeile A, B bewegt worden. Mit Erreichen des in Fig. 2 gekennzeichneten bestimmungsgemäßen Abstandes x wurden die diesen Abstand erreichenden Teilbereiche der Sammelleitungen 1, 2 derart elastisch gegenüber den in Förderrichtung nachfolgenden Bereichen deformiert, daß sich die im bestimmungsgemäßen Abstand x zueinander befindlichen Bereiche der Sammelleitungen 1, 2 in diesem Abstand parallel zueinander fortbewegen. Die verbleibenden nachfolgenden Bereiche der Sammelleitungen 1, 2 werden weiterhin unter dem Winkel α gefördert.

In Fig. 2 ist der Zeitpunkt dargestellt, an dem die Verbindungsleitungen 3a, b bereits in die entsprechenden Öffnungen der Sammelleitungen 1, 2 eingesetzt sind und mit diesen verlötet sind. Die Verbindungsleitung 3c wird gerade zum dargestellten Zeitpunkt in die entsprechenden Öffnungen der Sammelleitungen 1, 2 eingesetzt. Unmittelbar nach diesem Zeitpunkt erfolgt die Zugabe des für die Lötverbindung notwendigen Lotes, wodurch eine heizmediumsdichte Lötverbindung zwischen der Verbindungsleitung 3c und den Sammelleitungen 1, 2 gewährleistet wird.

Die nachfolgenden Verbindungsleitungen 3d und e sind noch nicht mit den Sammelleitungen 1, 2 zusammengefügt. An den Verbindungsleitungen 3d und e sind endseitig die mit diesen fortbewegten Induktionsspulen 6, 7 angeordnet. Die für die Erwärmung der Endbereiche der Verbindungsleitung 3d verwendeten Induktionsspulen 6, 7 sind bereits von diesen Endbereichen entfernt worden und schematisch außen neben den Sammelleitungen 1, 2 dargestellt. Die zur Erwärmung der Endbereiche der Verbindungsleitungen 3 verwendeten Induktionsspulen 6, 7 werden so lange wie möglich zusammen mit den Verbindungsleitungen fortbewegt und erst kurz vor dem Zusammenfügen mit den Sammelleitungen 1, 2 von den Endbereichen der Verbindungsleitungen 3 entfernt, um ein zu starkes Abkühlen der Endbereiche zu verhindern. Gleichfalls sind die zur Erwärmung der Sammelleitungen 1, 2 verwendeten Induktionsspulen 4, 5 möglichst kurz vor der Fügestelle angeordnet, um auch deren unerwünschtes Abkühlen zu verhindern bzw. zu verringern.

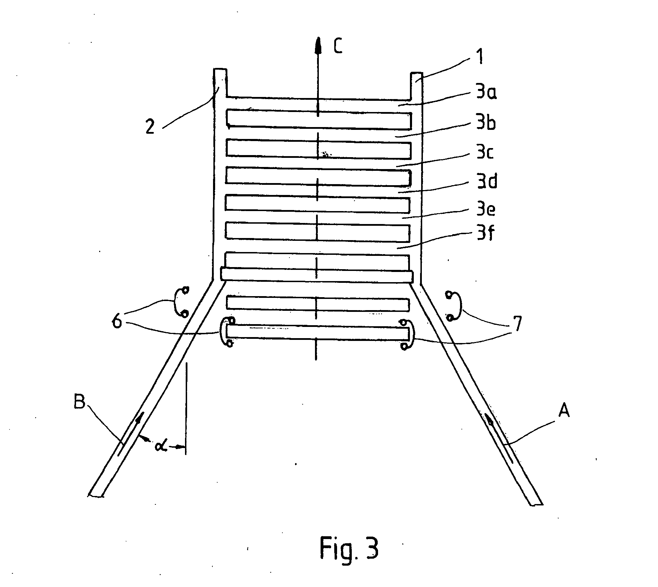

Fig. 3 zeigt die Herstellung des Heizkörpers mittels des erfindungsgemäßen Verfahrens zu einem abermals späteren Zeitpunkt. Man erkennt hier, daß die Sammelleitungen 1, 2 bereits mit den Verbindungsleitungen 3a, b, c, d, e und f zusammengefügt sind, während zum dargestellten Zeitpunkt gerade die Verbindungsleitung 3g eingefügt und nachfolgend verlötet wird.

Es ist anzumerken, daß der Winkel α, unter dem die Sammelleitungen 1, 2 relativ zur Bewegungsrichtung C bewegt werden, in den Zeichnungen aus Gründen der Klarheit übertrieben groß dargestellt wurde. Der Winkel α dient lediglich dazu, die Verbindungsleitungen 3 zwischen den Sammelleitungen 1, 2 anordnen zu können und in die in den Sammelleitungen 1, 2 vorgesehenen Öffnungen einsetzen zu können. Um die elastische Deformation der Sammelleitungen vor dem Zusammenfügen möglichst zu minimieren und die Sammelleitungen nicht unnötig zu schwächen, wird der Winkel α so klein wie möglich ausgewählt.

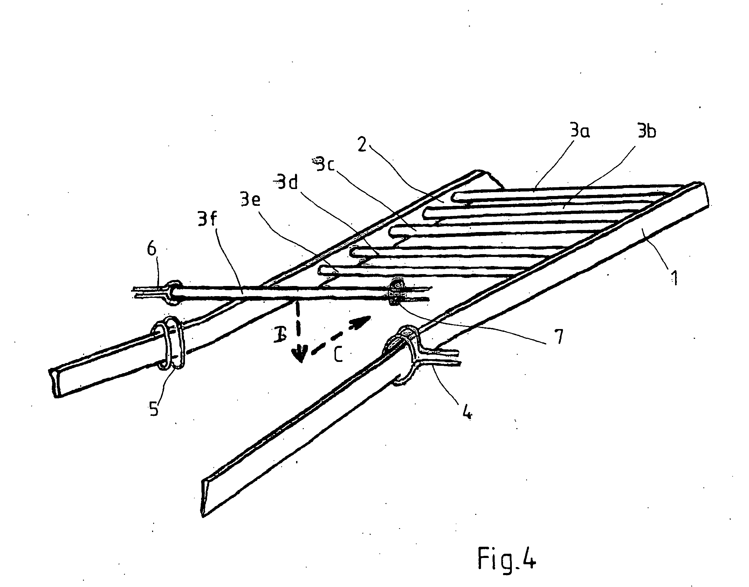

Fig. 4 zeigt den in Fig. 3 dargestellten Zeitpunkt in einer schematischen perspektivischen Ansicht. Der Fig. 4 ist zu entnehmen, daß die Verbindungsleitung 3f erst kurz vor der Stelle der elastischen Verformung der Sammelleitungen 1, 2 in die durch diese gebildete Ebene in Richtung des Pfeils B eingebracht wird und erst nachfolgend in Richtung C zusammen mit den Sammelleitungen 1, 2 und den bereits eingefügten Verbindungsleitungen 3a bis e fortbewegt wird. Hierdurch wird erreicht, daß die Sammelleitungen 1, 2 nur um einen möglichst kleinen Winkel α elastisch deformiert werden müssen, wodurch in vorteilhafter Weise die den Sammelleitungen 1, 2 auferlegten Belastungen minimiert werden. Darüber hinaus besteht durch die Erwärmung der Verbindungsleitungen 3 außerhalb der Ebene der Sammelleitungen 1, 2 ausreichend Raum zur Anordnung der Induktionsspulen 6,7.

### Bezugszeichen:

| | |
|---|---|
| 1 | Sammelleitung |
| 2 | Sammelleitung |
| 3a bis g | Verbindungsleitung |
| 4 | Induktionsspule |
| 5 | Induktionsspule |
| 6 | Induktionsspule |
| 7 | Induktionsspule |
| A | Bewegungsrichtung |
| B | Bewegungsrichtung |
| C | Bewegungsrichtung |

## Patentansprüche

1. Verfahren zur Herstellung eines Heizkörpers, wobei wenigstens zwei Sammelleitungen (1, 2) voneinander beabstandet angeordnet werden und mittels Verbindungsleitungen (3 a bis g) strömungstechnisch miteinander verbunden werden, indem die Sammelleitungen (1, 2) und die Verbindungsleitungen (3 a bis g) in bestimmungsgemäßer Weise zusammengefügt und heizmediumsdicht durch Löten stofflich miteinander verbunden werden, wobei die nach bestimmungsgemäß erfolgtem Zusammenfügen vorliegenden gemeinsamen Fügebereiche der Sammelleitungen (1, 2) und/oder der Verbindungsleitungen (3 a bis g) vor deren Zusammenfügen erwärmt werden, vorzugsweise auf die erforderliche Löttemperatur
**dadurch gekennzeichnet,**
**dass** die Sammelleitungen (1, 2) unter einer elastischen Verformung wenigstens einer Sammelleitung (1, 2) in ihre bestimmungsgemäße Lage zueinander und zu den Verbindungsleitungen (3 a bis g) gebracht werden.

2. Verfahren nach Anspruch 1, **dadurch gekennzeichnet, dass** die Sammelleitungen (1, 2) in Richtung ihrer Längsachse mit einer vorzugsweise konstanten Geschwindigkeit kontinuierlich unter einem spitzen Winkel schräg zueinander gefördert werden.

3. Verfahren nach Anspruch 1 oder 2, **dadurch gekennzeichnet, dass** die Verbindungsleitungen (3 a bis g) in ihre bezüglich der Sammelleitungen (1, 2) bestimmungsgemäße Lage gebracht werden und in deren Bewegungsrichtung mit gleicher Geschwindigkeit bewegt werden.

4. Verfahren nach Anspruch 3, **dadurch gekennzeichnet, dass** die Verbindungsleitungen (3 a bis g) während oder kurz vor der elastischen Verformung der Sammelleitungen (1, 2) mit diesen zusammengefügt werden.

5. Verfahren nach einem der vorhergehenden Ansprüche, **dadurch gekennzeichnet, dass** die Sammelleitungen (1, 2) in Richtung ihrer Längsachse durch vorzugsweise ortsfeste Heizvorrichtungen (4, 5) gefördert werden.

6. Verfahren nach einem der vorhergehenden Ansprüche, **dadurch gekennzeichnet, dass** die Verbindungsleitungen (3 a bis g) nur an ihren mit den Sammelleitungen (1, 2) zu verbindenden Endbereichen erwärmt werden.

7. Verfahren nach einem der vorhergehenden Ansprüche, **dadurch gekennzeichnet, dass** die Verbindungsleitungen (3 a bis g) zur Erwärmung endseitig mit Heizvorrichtungen (6, 7) versehen werden, die kurz vor dem Zusammenfügen mit den Sammelleitungen (1, 2) entfernt werden.

8. Verfahren nach einem der vorhergehenden Ansprüche, **dadurch gekennzeichnet, dass** die Erwärmung der Verbindungs- (3 a bis g) und/oder Sammelleitungen (1, 2) induktiv erfolgt.

9. Verfahren nach einem der vorhergehenden Ansprüche, **dadurch gekennzeichnet, dass** die Sammelleitungen (1, 2) jeweils durch wenigstens eine Induktionsspule (4, 5) gefördert werden.

10. Verfahren nach einem der vorhergehenden Ansprüche, **dadurch gekennzeichnet, dass** die Sammelleitungen (1, 2) und die Verbindungsleitungen (3 a bis g) unter Zugabe eines Lotes heizmediumsdicht miteinander verlötet werden, sobald sie in ihrer bestimmungsgemäßen Position zueinander angeordnet sind.

11. Verfahren nach einem der vorhergehenden Ansprüche, **dadurch gekennzeichnet, dass** das Löten unter einer Schutzgasatmosphäre erfolgt.

## Claims

1. A method for the manufacture of a radiator, wherein at least two header lines (1, 2) are spaced from each other and fluidically connected to each other by means of connecting lines (3a to g) in that the header lines (1, 2) and the connecting lines (3a to g) are assembled as intended and materially connected to each other in a heating medium tight manner by means of soldering, wherein the common assembly regions of the header lines (1, 2) and/or the collecting lines (3a to g) which are present after the assembly that has been realized as intended are heated up before their assembly, preferably up to the required soldering temperature,
**characterizd in that**
the header lines (1, 2) are moved into their intended position with respect to each other and with respect to the connecting lines (3a to g) while at least one header line (1, 2) is elastically deformed.

2. A method according to claim 1, **characterized in that** the header lines (1, 2) are continuously moved into the direction of their longitudinal axis with a preferably constant speed in an inclined position at an acute angle towards each other.

3. A method according to claim 1 or 2, **characterized in that** the connecting lines (3a to g) are brought into their intended position with respect to the header lines (1, 2) and moved in the direction of movement of these ones with the same speed.

4. A method according to claim 3, **characterized in that** the connecting lines (3a to g) are assembled to the header lines (1, 2) during or shortly before the elastic deformation of these ones.

5. A method according to one of the preceding claims, **characterized in that** the header lines (1, 2) are moved into the direction of their longitudinal axis through preferably stationary heating means (4, 5).

6. A method according to one of the preceding claims, **characterized in that** the connecting lines (3a to g) will only be heated at their end regions which are to be connected to the header lines (1, 2).

7. A method according to one of the preceding claims, **characterized in that** for heating up the connecting lines (3a to g) these ones are provided with heating means (6, 7) at their ends, which heating means will be removed shortly before the assembly with the header lines (1, 2).

8. A method according to one of the preceding claims, **characterized in that** the connecting lines (3a to g) and/or header lines (1, 2) are inductively heated up.

9. A method according to one of the preceding claims, **characterized in that** the header lines (1, 2) are moved by at least one induction coil (5, 5) respectively.

10. A method according to one of the preceding claims, **characterized in that** the header lines (1, 2) and the connecting lines (3a to g) will be soldered to each other in a heating medium tight manner while adding a solder as soon as they are placed in their intended position towards each other.

11. A method according to one of the preceding claims, **characterized in that** the soldering takes place under inert gas atmosphere.

## Revendications

1. Procédé de fabrication d'un radiateur, dans lequel au moins deux collecteurs (1, 2) sont espacés l'un de l'autre et reliés l'un à l'autre de manière fluidique par moyen des conduites de liaison (3a à g) en ce que les collecteurs (1, 2) et les conduites de liaison (3a à g) sont réunis de manière conforme à leur destination et reliés matériellement les uns aux autres par brasage de manière étanche par rapport au fluide de chauffage, dans lequel les zones de réunion communes des collecteurs (1, 2) et/ou des conduites de liaison (3a à g) lesquelles sont présentes après la réunion réalisée conformément à leur destination sont chauffées avant leur réunion, de préférence à la température de brasage nécessaire,
**caractérisé en ce que**
les collecteurs (1, 2) sont amenés dans leur position destinée l'un par rapport à l'autre et par rapport aux conduites de liaison (3a à g) en réalisant une déformation élastique d'au moins un collecteur (1, 2).

2. Procédé selon la revendication 1, **caractérisé en ce que** les collecteurs (1, 2) sont déplacés de manière continue dans la direction de leur axe longitudinal avec une vitesse de préférence constante en biais l'un par rapport à l'autre suivant un angle aigu.

3. Procédé selon la revendication 1 ou la revendication 2, **caractérisé en ce que** les conduites de liaison (3a à g) sont amenées dans leur position destinée par rapport aux collecteurs (1, 2) et déplacés dans la direction de mouvement de ceux-ci avec la même vitesse.

4. Procédé selon la revendication 3, **caractérisé en ce que** les conduites de liaison (3a à g) sont réunies aux collecteurs (1, 2) pendant ou peu avant la déformation élastique de ceux-ci.

5. Procédé selon l'une des revendications précédentes, **caractérisé en ce que** les collecteurs (1, 2) sont déplacés dans la direction de leur axe longitudinal à traves des dispositifs de chauffage (4, 5) de préférence stationnaires.

6. Procédé selon l'une des revendications précédentes, **caractérisé en ce que** les conduites de liaison (3a à g) ne sont chauffées qu'à leurs parties d'extrémité qui sont à relier aux collecteurs (1, 2).

7. Procédé selon l'une des revendications précédentes, **caractérisé en ce que** pour chauffer les conduites de liaison (3a à g) celles-ci sont munies aux extrémités des dispositifs de chauffage (6, 7) qui seront enlevés peu avant la réunion avec les collecteurs (1, 2).

8. Procédé selon l'une des revendications précédentes, **caractérisé en ce que** les conduites de liaison (3a à g) et/ou les collecteurs (1, 2) sont chauffés de façon inductive.

9. Procédé selon l'une des revendications précédentes, **caractérisé en ce que** les collecteurs (1, 2) sont chacun déplacés par au moins une bobine d'induction (4, 5).

10. Procédé selon l'une des revendications précédentes, **caractérisé en ce que** les collecteurs (1, 2) et les conduites de liaison (3a à g) seront brasés les uns aux autres de manière étanche par rapport au fluide de chauffage en ajoutant un métal d'apport de brasage dès qu'ils seront disposés dans leur position destinée les uns par rapport aux autres.

11. Procédé selon l'une des revendications précédentes, **caractérisé en ce que** le brasage se fait sous atmosphère de gaz inerte.
